# EUROPEAN PATENT APPLICATION

(11) **EP 3 605 945 A1**
(43) Date of publication of application: **05.02.2020**
(21) Application number: 18187363.9
(22) Date of filing: 03.08.2018
(51) Int. Cl.: H04L 9/32

(54) **METHOD AND SYSTEM FOR EXCHANGING DATA**

(71) Applicant: Dovetail Digital Limited, Stockton On Tees TS18 3EX (GB)
(72) Inventor: NAVARANJAN, Agash, London, EC2N 3AR (GB); NASH, William, London, EC2N 3AR (GB); EAVIS, Alexandra, London, EC2N 3AR (GB)
(74) Representative: Reeve, Nicholas Edward

(57) **Abstract**

A computer-implemented method for sending data from a sender apparatus to a recipient apparatus, wherein the data is associated with a data subject who is who is neither the sender nor the recipient, and the sending of the data is authorised by the data subject, the method comprising: the data subject providing a data structure comprising information identifying subject data to be shared and a related electronic signature generated by the data subject; recording the data structure on a distributed ledger; the sender apparatus verifying the data subject's electronic signature; the sender apparatus identifying the subject data to be shared based on the data structure. The distributed ledger may use a blockchain-based consensus mechanism.

## Description

### Field

This application relates to methods and systems for exchanging data between parties, and to sender and receiver apparatuses. The application describes methods and systems for securely verifying the occurrence, integrity and content of the data exchange.

### Background

The sending and receiving of data in an accountable recorded way has utility in various fields, particularly where data of a private nature is exchanged. It is possible to use encryption to prevent third-parties eavesdropping on the exchange of private sensitive data for example. However, there is a continuing need to manage the access to and transmission of data, and provide verification that the correct data was received for example. For example, where data subjects are not data holders but have additional rights over the data of which they are the subject there is a need to manage access to and transmission of the data.

### Brief description of the figures

Systems and methods in accordance with non-limiting embodiments will now be described with reference to the accompanying figures in which:
Figure 1 shows a schematic illustration of a system according to an embodiment, performing a method according to an embodiment;

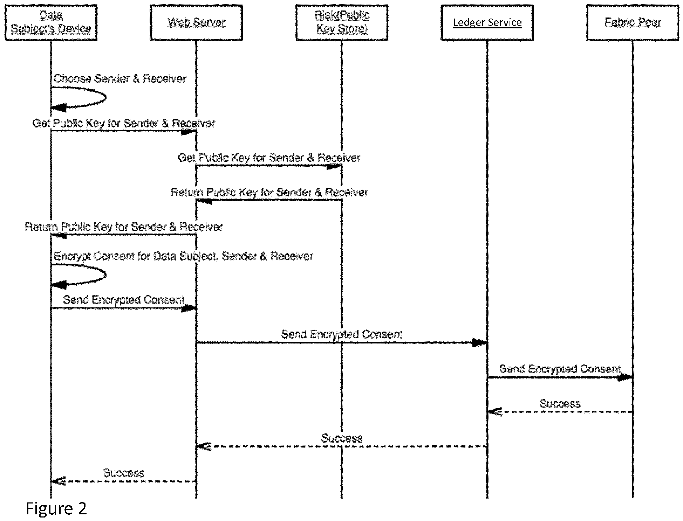

Figure 2 shows a flowchart of a method according to an embodiment, in which a data subject authorises the transfer of data from a sender to a recipient;
Figure 3(a) shows a flowchart of a method according to an embodiment, wherein the consent of a data subject to share the data subject's data is checked using a distributed ledger, data is then sent to a recipient and the data transfer is then recorded in the distributed ledger;
Figure 3(b) shows a schematic illustration of a data structure;
Figure 4(a) and Figure 4(b) show a flowchart of a method according to an embodiment, in which the integrity of received data is verified using a distributed ledger;
Figure 5 shows a flowchart of a method according to an embodiment, in which the integrity of received data is verified using a distributed ledger;
Figure 6 shows a flowchart of a method according to an embodiment, in which the integrity of received data is verified using a distributed ledger;
Figure 7 shows a flowchart of a method according to an embodiment, in which the result of data decryption, parsing of data, and result of data storage is recorded in a distributed ledger;
Figure 8 shows a flowchart of a method according to an embodiment, in which the integrity of received data and integrity of decrypted data is verified using a distributed ledger;
Figure 9 shows a flowchart of a method according to an embodiment, in which the parsing of data, and result of data storage is recorded in a distributed ledger;
Figure 10 shows a flow chart of a method according to an embodiment, in which data held by a recipient is checked using a data structure stored in the distributed ledger;
Figure 11 shows a flowchart of a method according to an embodiment, in which a recipient apparatus record system is audited;
Figure 12 shows a flowchart of a method according to an embodiment, in which a data subject withdraws their consent.

### Detailed description

According to an embodiment, there is provided a computer-implemented method for sending data from a sender apparatus to a recipient apparatus, wherein the data is associated with a data subject who is neither the sender nor the recipient, and the sending of the data is authorised by the data subject, the method comprising:
the data subject providing a data structure comprising information identifying subject data to be shared and a related electronic signature generated by the data subject;
recording information relating to the data structure on a distributed ledger;
the sender apparatus verifying the data subject's electronic signature;
the sender apparatus identifying the subject data to be shared based on the data structure.

The distributed ledger may use a blockchain-based consensus mechanism.

The electronic signature may be a digital signature. In this case, a public key may be used to verify the signature. Where the electronic signature is not a digital signature, a method other than a public key may be used to verify the electronic signature.

In an embodiment, the information relating to the data structure recorded on the ledger comprises the data structure.

The method allows a data subject to authorise and request that data, held by the sender, be sent to a recipient. The data structure is stored on nodes of a distributed ledger and is electronically signed. This acts as a verifiable audit trail that provides security for the data sending process. Any authorised node of this distributed ledger, i.e. the data subject, the sender, or the recipient for example, can verify the subject data identified and can verify the requests are legitimate. The distributed ledger stores a reference to the consent data structure. The security does not rely on a centralised record store which could be corrupted or compromised for example, or the reconciliation of separate records in order to detect errors. Additionally, since the processing and storage of data is performed in a distributed manner this helps to preserve data in case of data loss or hardware failure at any individual network node.

According to an embodiment, there is provided a computer-implemented method for sending data from a sender apparatus to a recipient apparatus, the method comprising:
providing a data structure comprising information identifying subject data to be shared and a related electronic signature;
recording information relating to the data structure on a distributed ledger;
the sender apparatus verifying the data subject's electronic signature;
the sender apparatus identifying the subject data to be shared based on the data structure.

The data structure itself may be recorded on the distributed ledger.

In an embodiment, the method further comprises the sender sending the identified subject data to the recipient. This transmission may be via a secure channel. This subject data is not recorded on the distributed ledger.

In an embodiment, the method further comprises one or more or all of:
the recipient apparatus verifying the data subject's electronic signature;
the recipient apparatus comparing the received subject data to the subject data identified in the data structure;
the recipient apparatus not using any received subject data that does not match the subject data identified in the data structure.

The recipient verifies the received subject data by comparing against the subject data identified in the data structure recorded on the distributed ledger. Since the subject data may be corrupted, compromised, or may contain the wrong data, by using the distributed ledger records to obtain a listing of what the subject data from the sender should contain, the recipient can avoid acquiring any subject data that is inaccurate or that it is not permitted to have for example. The recipient may discard the subject data that does not match the subject data identified in the data structure.

In an embodiment, the data structure further comprises information relating to the identity of the data subject and the recipient.

In an embodiment, the method further comprises:
the sender apparatus generating a first sent-data ledger-entry, the first sent-data ledger-entry comprising information relating to the identity of the data subject and the recipient;
recording the first sent-data ledger-entry on the distributed ledger;
comparing the information relating to the identity of the data subject and the recipient in the first sent-data ledger-entry, to the information relating to the identity of the data subject and the recipient in the data structure, at a plurality of parties to the distributed ledger;
wherein if the information relating to the identity of the data subject and the recipient are determined not to match, the sender apparatus does not send the identified subject data to the recipient.

The plurality of parties may be nodes in the distributed ledger channel, i.e. peers in the distributed ledger.

Comparing the information and determining whether the information matches may comprise performing a consensus mechanism.

In an embodiment, the method further comprises:
the sender apparatus generating a second sent-data ledger-entry, the second sent-data ledger entry comprising information relating to the identified subject data to be sent to the recipient apparatus;
recording the second sent-data ledger-entry on the distributed ledger;
the recipient apparatus generating a first received-data ledger-entry, the first received-data ledger entry comprising information relating to the subject data received by the recipient apparatus;
recording the first received-data ledger-entry on the distributed ledger;
comparing the second sent-data ledger-entry to the first received-data ledger-entry at a plurality of parties to the distributed ledger;
if the second sent-data ledger-entry and the first received-data ledger-entry are determined not to not match, terminating the process.

Comparing the entries and determining whether the entries match may comprise performing a consensus mechanism.

In an embodiment, the second sent-data ledger-entry comprises the result of a one-way function performed on the subject data to be sent to the recipient and the first received-data ledger-entry comprises the result of a one-way function performed on the subject data as received by the recipient.

In an embodiment, the sender encrypts the subject data before sending the subject data.

In an embodiment, the method further comprises:
the sender apparatus generating a third sent-data ledger-entry, the third sent-data ledger entry comprising information relating to the encrypted subject data to be sent to the recipient apparatus;
recording the third sent-data ledger-entry on the distributed ledger;
the recipient apparatus generating a second received-data ledger-entry, the second received-data ledger entry comprising information relating to the encrypted subject data received by the recipient apparatus;
recording the second received-data ledger-entry on the distributed ledger;
comparing the third sent-data ledger-entry to the second received-data ledger-entry at a plurality of parties to the distributed ledger;
if the third sent-data ledger-entry and the second received-data ledger-entry are determined not to not match, terminating the process.

In an embodiment, if the sent-data ledger-entry and the received-data ledger-entry are determined to match, the recipient decrypts the received subject data.

Comparing the entries and determining whether the entries match may comprise performing a consensus mechanism.

In an embodiment, the method further comprises encrypting the information identifying subject data to be shared.

According to a further embodiment, there is provided a method for sending data from a sender to a recipient, the method comprising:
the sender apparatus generating a sent-data ledger-entry relating to the data to be sent;
the sender apparatus sending the data to the recipient;
recording the sent-data ledger-entry on a distributed ledger;
the recipient apparatus generating a received-data ledger-entry relating to the received data;
recording the received-data ledger-entry as a distributed ledger entry;
comparing the sent-data ledger-entry to the received-data ledger entry at a plurality of parties to the distributed ledger.

The method allows a sender and a recipient to exchange data and to verify the data sent and received using the distributed ledger. Authorised nodes can execute code to compare the information. By performing this verification, further processing and storage of the received data can be avoided in the case where some corruption of the data occurs during transmission for example.

Comparing the entries may comprise performing a consensus mechanism. By performing this verification using code which executes on authorised nodes of the distributed ledger, errors in the verification caused by, for example, corruption during transmission may be mitigated. Furthermore, the distributed nature of the nodes means that the security and integrity does not rely on one of the parties or a single third party to correctly perform the comparison and report the result accurately.

The distributed ledger also acts to reduce the likelihood of losing the stored results of these comparisons. By using a distributed ledger, the results are stored with all authorised nodes, while references are stored with all nodes on the ledger. If one node suffers data loss, they need only resynchronise with the network to restore their copy of the data.

In an embodiment, the subject data sending is authorised by a data subject who is not the sender, and wherein the method further comprises:
the data subject providing a data structure comprising information identifying subject data to be sent and a related electronic signature generated by the data subject;
recording information relating to the data structure on the distributed ledger.

In an embodiment, the data structure further comprises information relating to the identity of the data subject and the recipient, and the method further comprises:
the sender apparatus generating a further sent-data ledger-entry entry, the further sent-data ledger-entry comprising information relating to the identity of the data subject and the recipient;
recording the further sent-data ledger-entry entry on the distributed ledger;
comparing the information relating to the identity of the data subject and the recipient in the further sent-data ledger-entry, to the information relating to the identity of the data subject and the recipient in the data structure at a plurality of parties to the distributed ledger;
wherein if the information relating to the identity of the data subject and the recipient are determined not to match, the sender apparatus does not send the identified data to the recipient.

The comparison may be performed using a consensus mechanism. In an embodiment, if it is determined that the sent-data ledger-entry and the received-data ledger-entry do not match, the recipient makes no use of the received data.

In an embodiment, the sent-data ledger-entry comprises the result of a one-way function performed on the subject data to be sent and wherein the received-data ledger-entry comprises the result of a one-way function performed on the data received by the recipient. The one-way function may be a hash function.

In an embodiment, the sender apparatus encrypts the subject data before sending the data to be sent, the sent-data ledger-entry relates to the unencrypted subject data and the received-data ledger-entry relates to the decrypted data, wherein if it is determined that the sent-data ledger-entry and the received-data ledger-entry do not match, the recipient apparatus makes no more use of the data.

In an embodiment, wherein the sender apparatus encrypts the data to be sent and the sent-data ledger-entry relates to the encrypted data, if it is determined that the sent-data ledger-entry and the received-data ledger-entry do not match, the recipient apparatus does not decrypt the data.

The above methods may be computer-implemented methods. Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium.

In a further embodiment, there is provided a carrier medium comprising computer readable code configured to cause a computer to perform any of the above methods.

According to a further embodiment, there is provided a sender apparatus, comprising:
a receiver configured to receive a data structure, information relating to the data structure being recorded on a distributed ledger, the data structure originating from a data subject, wherein the data structure comprises information identifying subject data to be shared and a related electronic signature generated by the data subject;
a processor configured to:
   verify the data subject's electronic signature;
   identify subject data to be shared based on the data structure.

In an embodiment, the sender apparatus further comprises a transmitter configured to send the identified subject data to a receiver.

According to a further embodiment, there is provided a host apparatus, comprising:
a receiver configured to receive a data structure comprising information identifying subject data to be shared and a related electronic signature generated by a data subject from a data subject device;
a processor configured to record information relating to the data structure on a distributed ledger.

According to a further embodiment, there is provided a data subject device, comprising:
a processor configured to generate a data structure comprising information identifying subject data to be shared and a related electronic signature generated by the data subject;
a transmitter configured to send the data structure to a host apparatus.

In an embodiment, the data subject device further comprises:
storage comprising one or more cryptographic keys.

According to a further embodiment, there is provided a system, comprising a sender apparatus, a data subject device, a host apparatus and a receiver apparatus, the data subject device comprising:
a processor configured to generate a data structure comprising information identifying subject data to be shared and a related electronic signature;
a transmitter configured to transmit the data structure to the host apparatus;
the host apparatus, sender apparatus and receiver apparatus configured to record information relating to the data structure on a distributed ledger;
the sender apparatus comprising a processor configured to:
   verify the data subject's electronic signature;
   identify the subject data to be shared based on the data structure.

According to a further embodiment, there is provided a receiver apparatus, comprising:
a receiver configured to receive data from a sender apparatus;
a processor configured to:
   generate a received-data ledger-entry relating to the received data;
   record the received-data ledger-entry on a distributed ledger, the distributed ledger comprising a sent-data ledger-entry relating to the data, wherein the sent-data ledger-entry was generated by the sender apparatus;
compare the sent-data ledger-entry to the received-data ledger-entry.

According to a further embodiment, there is provided a sender apparatus, comprising:
a transmitter configured to send data to a receiver apparatus;
a processor configured to:
   generate a sent-data ledger-entry relating to the data to be sent;
   record the sent-data ledger-entry on a distributed ledger;
   compare the sent-data ledger-entry to a received-data ledger-entry relating to the received data, the distributed ledger comprising the received-data ledger-entry, wherein the received-data ledger-entry was generated by the receiver apparatus.

According to a further embodiment, there is provided a system, comprising a sender apparatus and a receiver apparatus, the receiver apparatus comprising:
a transmitter configured to send data to a receiver apparatus;
a processor configured to:
   generate a sent-data ledger-entry relating to the data to be sent;
   record the sent-data ledger-entry on a distributed ledger;
   compare the sent-data ledger-entry to a received-data ledger-entry relating to the received data, the distributed ledger comprising the received-data ledger-entry, wherein the received-data ledger-entry was generated by the receiver apparatus;
the sender apparatus comprising:
   a receiver configured to receive data from a sender apparatus;
   a processor configured to:
      generate a received-data ledger-entry relating to the received data;
      record the received-data ledger-entry on a distributed ledger, the distributed ledger comprising a sent-data ledger-entry relating to the data, wherein the sent-data ledger-entry was generated by the sender apparatus;
      compare the sent-data ledger-entry to the received-data ledger-entry.

While the present method is suitable for the sending of any type of data, it may be particularly suited for the sending of medical data as authorised by a patient for example. This is because medical information relating to a given patient tends to be widely distributed between the various medical providers providing medical care to that patient, without a single authority to tie it together and with a need for long-term auditability. Data sharing between the medical providers may be required in order to ensure that an up-to-date medical history for that patient is available. Medical data is also of a highly sensitive and confidential nature. Thus data may need to be shared and stored in a secure manner, and ideally with the consent of the patient.

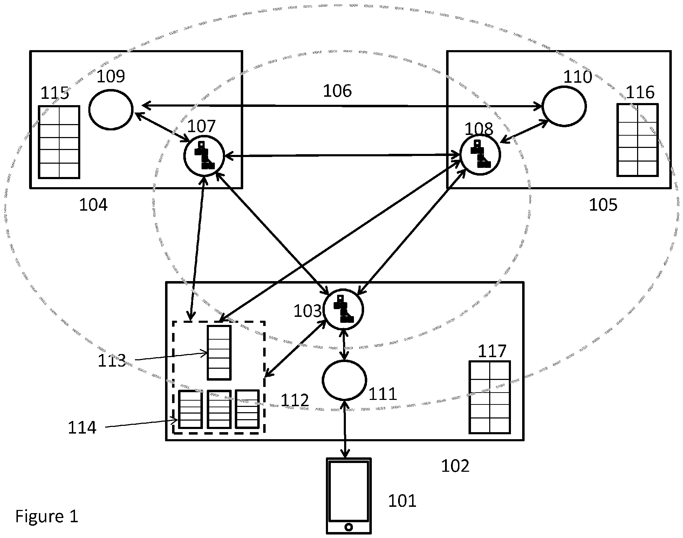

Figure 1 depicts a schematic illustration of a system in accordance with an embodiment. The system comprises a data subject device 101, a host apparatus 102, a sender apparatus 104 and a receiver apparatus 105. Functional elements of the apparatuses and devices are illustrated in the figure. The data subject device 101, host apparatus 102, sender apparatus 104 and receiver apparatus 105 may be in separate locations, and may communicate via a communication network, for example a wireless Internet connection.

Subject data, relating to a data subject such as a patient, is stored on an apparatus in the system. For example, subject data may be stored on the sender apparatus 104. The data subject may wish the sender apparatus 104 to share the subject data with the receiver apparatus 105 for example. In order to authorise this sharing, data relating to an authorisation from the data subject is recorded on a distributed ledger. The subject data itself is then sent separately (i.e. it is not recorded on the distributed ledger but sent directly from the sender apparatus 104 to the receiver apparatus 105 through a secure channel 106 for example). Further data relating to the transmission and receipt of the subject data is then recorded on the distributed ledger.

Each of the data subject device 101, host apparatus 102, sender apparatus 104 and receiver apparatus 105 comprises a processor and non-volatile memory. The non-volatile memory is accessed by the processor, such that a program comprising code stored in the non-volatile memory may be retrieved and executed by the processor. The processor may comprise logic circuitry that responds to and processes the instructions in the stored code. Each of the data subject device 101, host apparatus 102, sender apparatus 104 and receiver apparatus 105 may comprise further storage, which may store data that is used by a program. For example, the sender apparatus 104 may store a records system suitable for recording medical subject data relating to patients. Data may alternatively or additionally be stored in remote storage and accessed via a communication network. The data subject device may be a computer device such as mobile device, including but not limited to a mobile phone or tablet device for example. Each of the host apparatus 102, sender apparatus 104 and receiver apparatus 105 may comprise a computer for example.

Each of the data subject device 101, host apparatus 102, sender apparatus 104 and receiver apparatus 105 may further comprise input hardware for receiving input information. For example, a receiver for receiving data transmitted over the communication network, a connector allowing data to be read from a stored file on a separate storage medium such as a floppy disk, a CD ROM, a magnetic device or a programmable memory device, and/or hardware for receiving data subject input such as a keyboard, touchscreen or microphone for example. Each of the data subject device 101, host apparatus 102, sender apparatus 104 and receiver apparatus 105 may further comprise output hardware such as a transmitter for transmitting data over the network, a connector allowing data to be written to a stored file on a separate storage medium such as a floppy disk, a CD ROM, a magnetic device or a programmable memory device, and/or hardware for outputting to a data subject such as a display or speaker for example.

In use, stored code is executed on the processor at each of the data subject device 101, host apparatus 102, sender apparatus 104 and receiver apparatus 105, to perform a method in the manner which will be described with reference to the following figures. Although a single processor located in each apparatus has been described, each apparatus may comprise two or more remotely located processors configured to perform different parts of the processing and transmit data between them for example. Furthermore, each of the data subject device 101, host apparatus 102, sender apparatus 104 and receiver apparatus 105 may implement some or all of the method on a cloud computing system, which receives and transmits data.

Each of the host apparatus 102, sender apparatus 104 and receiver apparatus 105 comprises a node: the sender node 107, receiver node 108 and host node 103. Each node is an entity that maintains and performs operations on a local copy of the distributed ledger. The nodes form a peer-to-peer network. Each of the host apparatus 102, sender apparatus 104 and receiver apparatus 105 runs an application 109, 110, 111 which interfaces with the features and data of the distributed ledger through an API for example. The distributed ledger may be based on the Hyperledger Fabric for example. An example of a Hyperledger Fabric is described in the document "Hyperledger Architecture, Volume 1" at https://www.hyperledger.org/wp-content/uploads/2017/08/ Hyperledger Arch WG Paper 1 Consensus.pdf, which is incorporated herein by reference. However the distributed ledger may be implemented using alternative frameworks. The distributed ledger may use a blockchain-based consensus mechanism for example.

Although for simplicity, the system is illustrated comprising only a single data subject device 102, the system may comprise further data subjects, each having a data subject device. Furthermore, although a single sender apparatus 102 and receiver apparatus 105 is shown, further apparatuses, each comprising a node and running an application, may be included in the system. For example, where healthcare providers in the healthcare service of a country are part of the system, and users of the healthcare service are data subjects, there may be thousands of apparatuses and millions of data subjects in the system.

Each data subject device and apparatus (including the host apparatus 102, sender apparatus 104 and receiver apparatus 105) may store or have access to stored cryptographic keys. For example, each data subject device may generate a public and private key pair, the private key then being stored on their device. Similarly, when each node joins the distributed ledger system, including the host apparatus 102, sender apparatus 104, and recipient apparatus 105, its own private/public key pair is generated, and the private key stored on the apparatus. The data subject device 101 may upload its public key to the host apparatus 102 where it can be shared to other nodes in the network for later use. The nodes will each share their own public keys with the other nodes in the system as well. A list of all the public keys for all the entities in the system, including the apparatuses and the data subject devices, may be maintained in a distributed key-value store. The private key for each entity is not accessible by the other parties. Each node in the distributed ledger system may further comprise one or more additional cryptographic keys for signing and/or encryption for example.

The system may be a private system. For example, the host apparatus 102 may be the only party who can allow an entity to join the system. The entity wishing to join the system may generate a public/private key pair, and send the public key to the host apparatus 102. The public keys corresponding to each entity in the system are shared with or accessible to all entities in the system, such that all of the entities in the system are known.

In the below described methods, data relating to an authorisation to share subject data and relating to the transmission and receipt of the subject data is recorded on a distributed ledger. The subject data itself is sent directly between the parties (i.e. not recorded on the distributed ledger). In these methods, when a first apparatus in the system (the host apparatus 102, sender apparatus 104 or receiver apparatus 105 for example) wishes to record data (for example data relating to an authorisation to share subject data or relating to a transmission or receipt of subject data) on the distributed ledger, the following procedure is performed.

The data may first be digitally signed by the first apparatus. Each apparatus in the distributed ledger system may store one or more cryptographic keys which are used for digital signing when recording data on the distributed ledger. For example, ECDSA keys supplied by Hyperledger Fabric may be used to sign the ledger entries. A request is sent through the API at the first apparatus with the data and the data signature. A ledger entry comprising the data that the first apparatus wishes to be recorded in the distributed ledger and the data signature is created. The ledger entry may comprise a reference to a smart contract for storing the data, an identification of a channel, the data itself and the signature for example. The channel is a group of nodes in the system that the ledger entry relates to. The channels will be described in further detail below.

Smart contracts comprise programs installed on the nodes, which may comprise conditions that, when satisfied, cause the rest of the code to execute. For example, a smart contract for storing a ledger entry may comprise code instructing the nodes to perform a check on the data specified in the ledger entry. The smart contracts will also be described in further detail below.

In order for the ledger entry to be added to the distributed ledger, the first apparatus node must consent to the addition of the ledger entry to the distributed ledger. The first apparatus node performs the same check specified in the smart contract identified in the ledger entry, for the data kind in the ledger entry, to determine whether the ledger entry may be added to the ledger. For example, if the data is a consent data structure (which will be described below), a check to determine if all the required data fields are present is performed. If the data is for an audit action, for example a sent-data ledger entry or received-data ledger entry (which will be described below), a check to determine if the related data structure exists is performed.

If the consent of the first apparatus node is obtained, the ledger entry is then directed to an ordering service 112. The ordering service 112 routes ledger entries to the appropriate channel, and maintains a global order of all ledger entries for the entire system. The ordering service 112 can be implemented in different ways: for example it may be implemented on the host apparatus 102 as shown in Figure 1 or using a distributed protocol. There may be a plurality of ordering services. For example, if the ordering service 112 is implemented on the host apparatus 102, and the sender apparatus 104 wishes to add a ledger entry to the distributed ledger, the ledger entry is first transmitted from the sender apparatus node to the ordering service 112 at the host apparatus 102. Various implementations of an ordering service in a Hyperledger framework are described in the document "Hyperledger Architecture, Volume 1" at https://www.hyperledger.org/wp-content/uploads/2017/08/Hyperledqer Arch WG Paper 1 Consensus.pdf, which is incorporated herein by reference.

The ordering service 112 determines the order in which the ledger entries are to be entered on the distributed ledger. For example, this may be based on the time at which the ledger entry is received by the ordering service 112. The ordering service 112 then routes the ledger entry to the nodes in the channel identified in the ledger entry.

To determine whether the ledger entry can be added to the distributed ledger, the smart contract referenced in the ledger entry is then executed on the nodes in the channel. Each node in the channel performs the check specified in the smart contract for the data kind in the ledger entry to determine whether the ledger entry may be added to the ledger. For example, if the data is a consent data structure, a check to determine if all the required data fields are present is performed. If the data is an audit, for example a sent-data ledger entry or received-data ledger entry, a check to determine if the data structure exists is performed. A consensus mechanism is then performed between the nodes. The consensus mechanism will be described in detail below. If consensus is reached, an electronically signed indication, in the form of a new ledger entry, is then communicated to all the nodes in the system, and the ledger entry is accepted into the distributed ledger. Each node in the system updates their local copy of the distributed ledger accordingly.

As described above, although the system may comprise many nodes, each instance of data to be added to the distributed ledger may relate to two or more nodes only. A channel comprising the nodes to which the data relates and the host node 103 is identified in the ledger entry data. The ordering service 112 identifies the channel to which the ledger entry data relates from the ledger entry data. Channels associated with particular combinations of nodes may be generated by the host apparatus 102 for example and assigned a unique identifier. The channel identifiers are also stored at the ordering service 112. The unique identifier associated with the channel is then used by the nodes when generating a ledger entry to identify the relevant channel and then by the ordering service 112 to route the ledger entry to the nodes in the channel. For example, where the ledger entry identifies the channel comprising the sender apparatus 104 and receiver apparatus 105, the ordering service 112 routes the ledger entry to the sender apparatus 104, receiver apparatus 105 and host apparatus 102. The ordering service 112 maintains an ordered list 113 of the ledger entries for all nodes in the system, as well as ordered sub-lists 114 corresponding to the ledger entries for each channel. The consensus mechanisms are performed based on the channels, and each node in the channel maintains an index of the ledger entries for the channel. Note a channel may comprise every node in the system for example or any sub-group of the nodes in the system.

As described above, the ordering service 112 transmits the ledger entries to the nodes in the channel, and the consensus mechanism is performed. The consensus mechanism is performed by the nodes in the channel, thus in this example it is performed by the sender node 107, receiver node 108 and host node 103. An example of a consensus mechanism which may be used is Practical Byzantine Fault Tolerance (PBFT). In the following description, PBFT will be described as the consensus mechanism. However, other types of consensus mechanism can alternatively be used. Each authorised node performs the check specified in the smart contract. When using PBFT, if a node determines that a check is verified, it will digitally sign the ledger entry and then transmit the signed ledger entry to all of the other nodes in the channel. Each node in the channel will inspect the signed ledger entries that they have received from the other nodes in the channel and determine what proportion of the nodes in the channel consented. If this proportion reaches or exceeds two thirds of the total number of nodes then consensus is reached. If consensus is not reached, a notification may be sent for example.

Each node stores their own copy of the distributed ledger. Each node in the system adds the new ledger entry to the locally stored copy of the distributed ledger. Furthermore, each node in the channel may store an indexed list 115, 116, 117 of the data from the ledger entries relating to the channel. Each node may store a separate index for each channel which it is part of. Each ledger entry for the channel is stored in the index in each node in the channel once it is accepted onto the ledger.

The ledger entries in the distributed ledger may be ordered in bundles. Each bundle may comprise a header comprising a summary of the ledger entries and a cryptographic hash of the header of the previous bundle. Editing an earlier ledger entry would then require that all subsequent headers be altered and that consensus be reached on all these alterations. In PBFT the ledger entries are signed by each of the nodes in the channel which consented to the addition of that ledger entry. In order to amend a previous ledger entry, the amender would have to obtain consensus that each of the ledger entries should be amended. Effectively a distributed ledger may be used as an "append-only" ledger of records for this reason. It should be noted that new records can be added noting a change, but the original record will be maintained and not overwritten or deleted.

As described above, smart contracts are executed on the nodes in the channel at various stages. Smart contracts comprise programs of code that run on each node in the channel. These programs may comprise conditions that, when satisfied, cause the rest of the code to execute on each node in the channel for example. In this way, the programs can be used to generate a ledger entry with multiple possible outputs depending on the conditions stipulated therein. The smart contracts may be generated by the host apparatus 102, and transmitted to and installed on the nodes in the system, for example, when a new entity joins the system. The host apparatus 102 may stipulate which smart contracts may be run in which channels. The ledger entries comprise instructions to execute specific smart contracts.

In the description of the methods below, data is recorded as a ledger entry on a distributed ledger at various stages. In each case, the above described process is followed in order to record the data as a ledger entry on the distributed ledger.

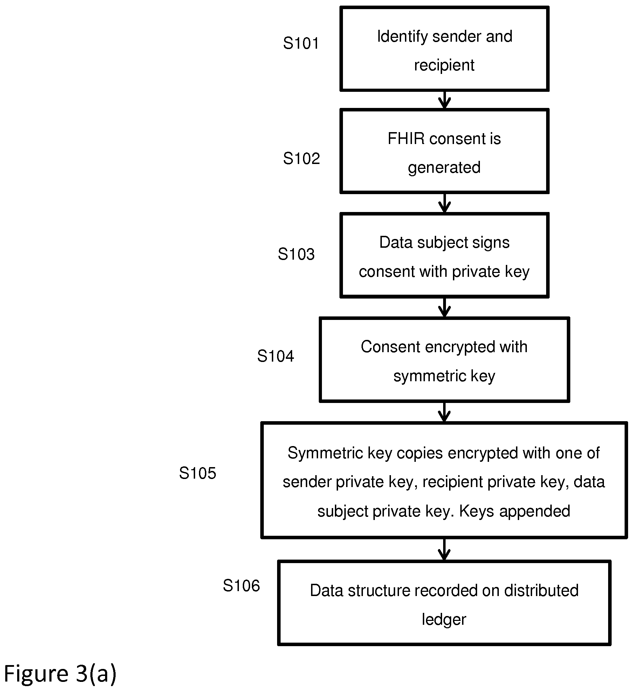

Figure 3(a) depicts a method for sending data from a sender to a recipient according to an embodiment. In this method, a data subject generates a secure data structure to document their consenting to subject data, stored or controlled by a sender, to be sent to a recipient. The data subject authorises and requests the sharing of the subject's data, stored at the sender apparatus 104, with the recipient apparatus 105. The subject data is then sent directly from the sender apparatus 104 to the recipient apparatus 105, for example through a secure connection. The subject data is not recorded on the distributed ledger.

First the data subject identifies the sender and recipient of the subject data S101. Where the method relates to exchange of healthcare data between, for example, two healthcare service providers, the subject data could include medical conditions, allergies, medications taken, and other medical data. Healthcare data will be described as an example in the below, however other types of subject data may be exchanged. For example, the data subject may select, using the input at the data subject device 101, the sender and receiver of the subject data which they wish to be shared. For example, a touchscreen may be used to select the sender and receiver from a list. The list may show the names of the organisations and the type of organisations. It may also show information such as what the data will be used for and/or how to request the data to be deleted for example. The timeframe of the subject data to be shared could also be identified. For example a data subject may wish to share the last 5 years of subject data. An identification of the subject data to be sent may then be automatically populated based on recipient type. For example, if the recipient is a podiatrist, the subject data to be sent may automatically be populated as that relating to feet. If the receiver is a cardiology doctor then the subject data to be sent may be populated as that relating to heart conditions for example.

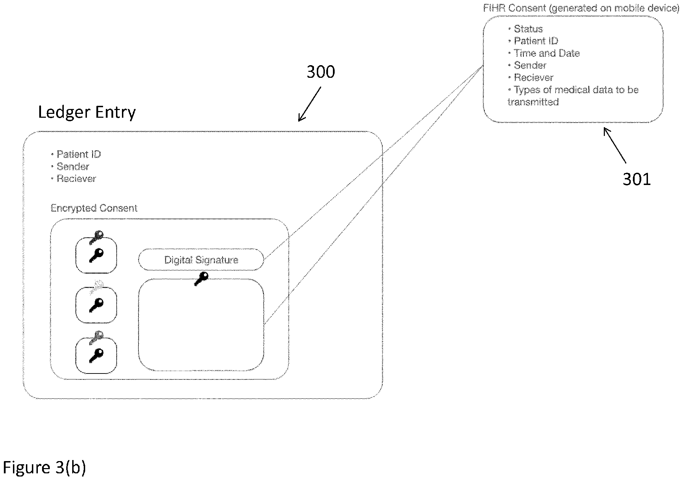

A data structure comprising information identifying the subject data to be sent is then generated in S102 on the data subject device 101. Figure 3(b) shows an example of the data structure 300 generated in S102. The data structure 300 is generated at the data subject device 101, comprising information identifying the subject data and an electronic signature generated by the data subject device. The electronic signature may be a digital signature generated using the data subject's private key for example. The data structure comprises the information identifying the subject data to be sent, information relating to the identity of the sender, information relating to the identity of the recipient and also an indication of the data subject's identity (for example their name or a pseudonymous identifier). Where the subject data comprises medical data, the information identifying the subject data to be sent may be in the form of a FHIR specification (Fast Healthcare Interoperability Resources) for example, an Industry-Standard data structure format which can readily define this type of information. Alternative data structures which permit the execution of the method can also be used however.

The information identifying the subject data to be sent can also be referred to as a "consent" 301. The consent 301 may comprise the following information: a data subject identifier (e.g. a patient ID), time and date information, sender identification, receiver identification, and the subject data to be transmitted (e.g. the types of medical data to be transmitted). This information may be in the form of an FHIR specification for example.

The data subject then electronically signs the consent. In this example, the data subject digitally signs the consent 301 (i.e. comprising the information identifying the subject data to be sent) using their private key in S103. However, other methods of electronic signing may be used, which do not involve public/private key pairs. The data subject has already uploaded their corresponding public key to a publicly accessible resource, i.e. the distributed key value store, as described above. The consent 301 (i.e. the information identifying the subject data to be sent) is thus generated on the data subject device 101 and then digitally signed using an asymmetric key (i.e. the data subject's private key) held on the data subject device 101. This then creates an electronic signature of the consent so it can be verified.

The information identifying the subject data to be shared (i.e. the consent 301) is then encrypted with a symmetric key in S104. In an embodiment, an Advanced Encryption Standard (AES) key may be used for example. At this point, the consent 301 (i.e. comprising the information identifying the data to be sent) is encrypted with a one-time symmetric key. Metadata, comprising the identity of the parties (i.e. the sender, receiver and data subject) is also included in the data structure, but is not encrypted so that third parties can identify the relevant entities. A "Sender" field and "Receiver" field in the data structure may be populated for example. In some cases, the identity of one or more of the parties may be pseudonymised by replacing their publicly recognisable identifiers with a pseudonymous identifier. For example, the identifier of the data subject (e.g. their name) may be replaced with an identifier that is not publicly known, such as a healthcare database identification number, e.g. an NHS number.

Three copies of the symmetric key are then generated, the first encrypted with the sender's public key, the second encrypted with the recipient's public key, and the third with the data subject's public key in S105. These encrypted key copies are then appended. By doing this, only the sender, the recipient, and the data subject can access the content of the consent 301. Third parties will be able to read the meta-data of the data structure 300 such as the identity of the parties, albeit which may be in pseudonymised form but not, for example, what subject data the data subject wishes the sender to share. This provides security by making the detailed information private to the relevant parties. The consent payload is larger than the symmetric key, therefore using a symmetric key to encrypt the consent and then encrypting three copies of the symmetric key reduces the size of the data structure.

At this stage, the data structure comprises information identifying subject data to be shared (i.e. the consent 301) encrypted with a symmetric key, an electronic signature generated by the data subject, information relating to the identity of the sender, information relating to the identity of the recipient and information relating to the identity of the data subject, the symmetric key encrypted with the data subject's public key, the symmetric key encrypted with the sender's public key, and the symmetric key encrypted with the recipient's public key. The consent 301 may additionally comprise time information such as the time at which the data structure was generated.

The data structure is then recorded on the distributed ledger in S106. The data structure is recorded on the distributed ledger in the manner described above. Namely, the data subject first sends the data structure to the host apparatus 102 which creates a ledger entry containing the data structure. The ledger entry may comprise a reference to a smart contract for storing the data structure, an identification of the channel, the data structure itself and the signature of the host apparatus for example, as described above. The smart contract in this case instructs the nodes to perform a check that all the required fields are present in the data structure. The required fields may comprise an electronic signature generated by the data subject, information relating to the identity of the sender, information relating to the identity of the recipient and information relating to the identity of the data subject, the symmetric key encrypted with the data subject's public key, the symmetric key encrypted with the sender's public key, and the symmetric key encrypted with the recipient's public key. The host apparatus node 103 first performs the same check specified in the smart contract, in this case it checks whether the required fields are present. If the check is verified, the host apparatus node 103 consents to the addition of the ledger entry, and the ledger entry is directed to the ordering service 112.

The ordering service 112 identifies the channel from the information in the ledger entry and records the ledger entry in the ordered list of the ledger entries for all nodes in the system, as well as in the ordered list corresponding to the ledger entries for the channel. As described above, this ledger entry will then be sent to the nodes in the channel and processed by the nodes in the channel according to the smart contract and the consensus mechanism. Each node in the channel performs the check specified in the smart contract, in the case, each node checks whether the required fields are present. If a consensus is reached, the ledger entry becomes part of the distributed ledger. Once the entry has been accepted into the ledger, the sender apparatus 104 will have a copy of the data structure generated by the data subject stored on its copy of the distributed ledger.

As described previously, as well as maintaining a copy of the distributed ledger, each node also maintains an index comprising the ledger entry information relevant to the node. As well as recording the ledger entry on the distributed ledger, each node in the channel (in this case the sender node 107, receiver node 108 and host node 103) stores the data structure locally in the index 115, 116, 117 relating to the channel.

Thus the data structure 300 is sent by the data subject's device 101 to the host apparatus 102, which comprises a distributed ledger node, and acts an intermediary for the data subject to access the distributed ledger. Thus the data subject device 101 may be a mobile device which accesses the distributed ledger through the host apparatus 102, and may not comprise a node itself (since the distributed ledger may, for example, require nodes to be continuously connected in order for the consensus mechanism to operate). Where there are many data subjects in the system, each data subject device may use the host apparatus 102 as an intermediary to access the distributed ledger. Optionally, some or all of the data subjects may directly act as nodes on the distributed ledger however.

As described above, the consent 301 is digitally signed with the data subject's private key. The host apparatus 102 confirms the signature against the data subject's public key. If the signature is confirmed then the host apparatus generates the ledger entry and includes its signature and then proceeds with the process described above.

The FHIR consent bundle 301 is thus generated on the data subject device 101 and comprises information about the data subject, the sender and the receiver. The FHIR consent bundle is digitally signed by the data subject's private key. It is also encrypted with a one-time key. The one-time key is encrypted with each individual party's key which is used to access and verify the data. The public keys can be retrieved using the participant's ID, and are then used to encrypt the one time key. The FHIR consent bundle 301 is thus encrypted in such a way that the sender, receiver and original data subject can access it. The data structure 300 is stored on the distributed ledger. Most of the data structure 300 which is stored on the distributed ledger originates from the FHIR consent structure 301. This also exists in the encrypted FHIR consent.

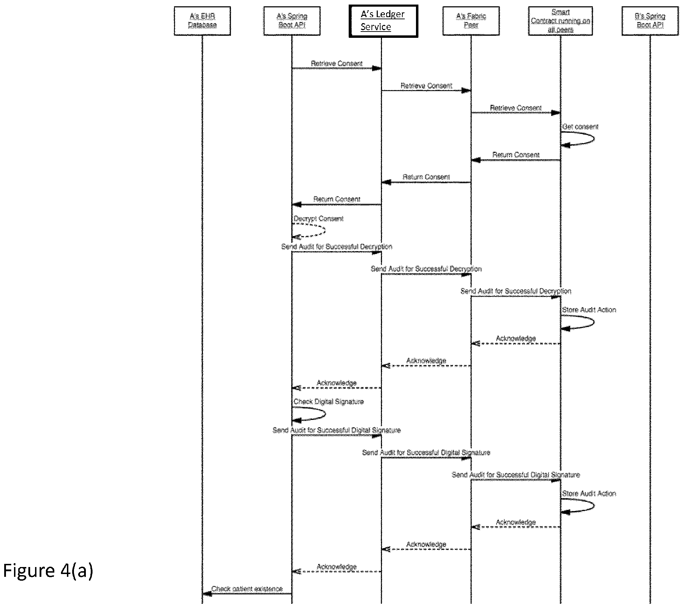

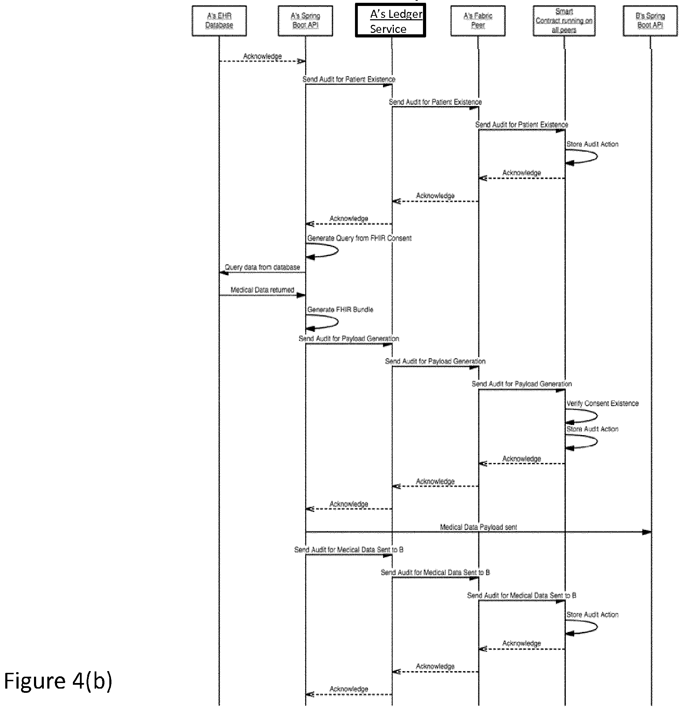

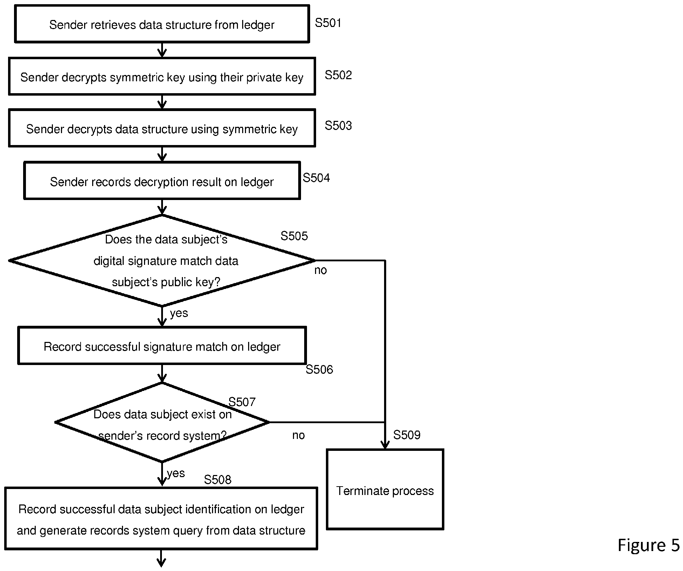

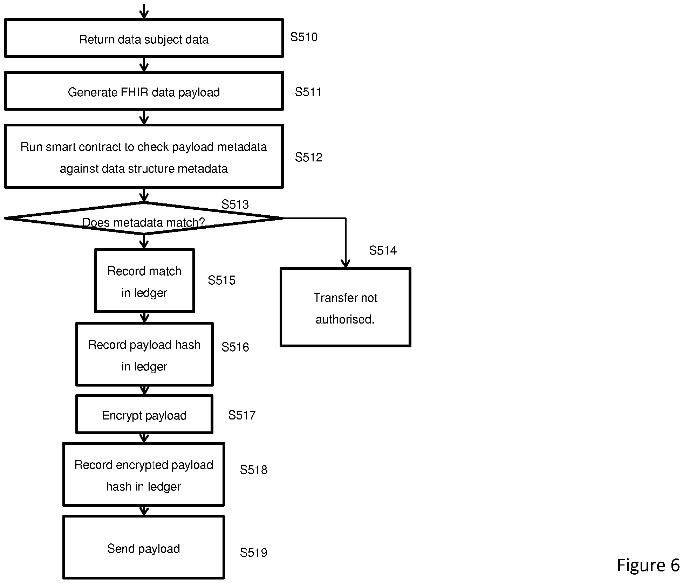

Figures 4(a) and 4(b) show steps of a method according to an embodiment, in which the integrity of received data is verified using a distributed ledger. Figures 5 and 6 show a flowchart of a method according to an embodiment, in which the integrity of received data is verified using a distributed ledger. Figures 5 and 6 show the sender's interaction with the distributed ledger and the data subject's data. The sender apparatus 104 performs some checks of the data structure (as will be described below) and, if these checks are satisfied, the sender apparatus identifies the data subject's data to be sent and prepares the data subject's data for sending to the recipient.

Each apparatus is continuously monitoring their distributed ledger node for new ledger entries that are relevant to them e.g. ledger entries where the apparatus is listed as a party. As shown in Figure 5, the sender retrieves the data structure from its node S501 and stores a copy in its local index 115. Each node in the channel retrieves the data structure and stores a copy in its local index. Since the data structure stipulates that the sender apparatus is the sender party, (i.e. the meta-data identifies the sender), the sender apparatus 104 will begin executing further operations.

The sender apparatus 104 uses its private key to decrypt its copy of the symmetric key S502 in the data structure and uses the symmetric key to decrypt the information identifying the subject data to be shared (i.e. the consent 301) in the data structure in S503. The decryption result, for example a one way function performed on the decrypted consent, is then recorded on the distributed ledger S504 as a ledger entry, in the manner described previously. Namely, the sender apparatus 104 generates a ledger entry comprising the result of the one-way function on the decrypted consent, the channel identifier, a reference to a smart contract for storing the decryption result and the sender apparatus signature. The sender apparatus node performs the check specified in the referenced smart contract. In this case, the specified check comprises determining that the consent data structure exists in the index. The check may further comprise that the ledger entry is well-formed for example. If the check is successful, the sender apparatus node sends the ledger entry to the ordering service 112, which routes the ledger entry to the nodes in the channel. Each node in the channel performs the same check as specified in the smart contract and the consensus mechanism is performed. If the consensus is achieved, the ledger entry is stored in the distributed ledger. If the decryption is recorded as successful, then the process continues, otherwise it is terminated.

The sender apparatus 104 uses the data subject's public key to verify that the electronic signature in the data structure belongs to the data subject S505. The result of this check is recorded on the distributed ledger as a ledger entry in the same manner as described above for the decryption result. If the check confirms an authentic signature, then this is recorded, and the process continues S506. Otherwise the failure is recorded and the process terminates S509.

The sender apparatus 104 then confirms that the data subject exists on their records system S507. This could be using the data subject's name, their pseudonymous identifier, or some other identifying information. The result of this, whether positive S508 or negative S509 is also recorded in the distributed ledger as a ledger entry in the manner described above. In this case, the specified check comprises determining that the consent data structure referenced in the ledger entry exists in the index. The check may further comprise determining that the ledger entry is well-formed for example.

If all of these checks have been successful and been recorded, the sender apparatus 104 then uses the data structure to generate a query which can be executed on their record system S508. Continuing in Figure 6, the query returns the subject data that was defined in the data structure from the record system S510. It is reasonably likely that this subject data will not be in format that is suitable to be shared with third parties directly. As such, the sender will convert the subject data to be sent into a shareable subject data payload e.g. a FHIR bundle S511, which will act as a universal means to exchange subject data between parties. The FHIR bundle may comprise one or more FHIR resources.

This shareable subject data payload differs from the data structure 300 comprising the consent 301 in that the data structure 300 comprising the consent 301 only defines the types of subject data that should be shared (e.g. an FHIR specification). The subject data payload contains the list of data types but the items in this list further contain the actual subject data. Additionally, in the case where a FHIR bundle is used to contain the subject data, the payload make comprise multiple FHIR resources.

The sender then creates a ledger entry that includes the metadata of the subject data payload, including the identity of the recipient, the identity of the sender, and the identity of the data subject. Namely, the sender apparatus generates a ledger entry comprising the metadata, the channel identifier, a reference to a smart contract for storing the ledger entry and the sender apparatus signature. This ledger entry is an example of a first sent-data ledger-entry. Once the ledger entry is received by the nodes in the channel from the ordering service 112, the nodes in the channel execute the code of the smart contract in S512, described in further detail below. Each node in the channel performs the check specified in the smart contract. A consensus mechanism is performed, as described above. If consensus is reached, the ledger entry is added to the distributed ledger.

The smart contract, comprising a set of coded instructions which are executed by the nodes in the channel, is executed in S512. Thus once the first sent-data ledger entry is received by the nodes in the channel from the ordering service 112, the nodes in the channel execute the code of the smart contract. In this step, the smart contract comprises instructions for each node to verify if the metadata of the data payload included in the first sent-data ledger entry matches that contained in the referenced data structure 300 S513. Each node in the channel performs the comparison. If a node determines a match, it will digitally sign a ledger entry confirming a match and then transmit the signed ledger entry to all of other the nodes in the channel. Each node will inspect the signed ledger entries that they have received from the other nodes and determine what proportion of the nodes in the channel determined a match. If this proportion reaches or exceeds two thirds then the node will accept the first sent-data ledger entry recording a match into the ledger.

Thus if the smart contract condition is satisfied, determined using the consensus mechanism, the nodes record that there was a successful match in a ledger entry S515, i.e. the first sent-data ledger entry is recorded. The sender apparatus 102 interprets this as authorisation has been given. Otherwise, since the smart contract conditions have not been satisfied, this is interpreted by the sender apparatus 104 that the authorisation to transfer the data has not been given S514 and the process on the sender apparatus 104 terminates. The nodes may record that the metadata does not match the data structure in a ledger entry, or by sending some notification for example. If some nodes determine that there is a match while others do not, then the consensus mechanism, as described above, will cause the channel as a whole to determine between a successful or unsuccessful match.

If authorisation is given S515, the sender apparatus 104 generates a cryptographic hash of the payload containing the subject data to be shared and records this hash in a distributed ledger entry S516. Although a hash is described in this example, an alternative one-way function may be performed. This is an example of a second sent-data ledger entry. The second sent-data ledger entry is an example of data to be used for an audit action. The sender apparatus 102 generates the second sent-data ledger entry comprising the hash, the channel identifier, a reference to the data structure, a reference to a smart contract for checking that the data structure referred to exists and the sender apparatus signature. Once the ledger entry is received by the nodes in the channel from the ordering service 112, the nodes in the channel execute the code of the smart contract. In this step, the smart contract comprises instructions for each node to check if the data structure referred to exists in the index. Each node in the channel performs the check and the consensus mechanism is performed as before. If consensus is reached, the ledger entry is added to the ledger.

The sender apparatus 104 then encrypts the subject data payload using a symmetric key and then encrypts a copy of the symmetric key with the recipient's public key S517, before appending the encrypted symmetric key to the payload. A cryptographic hash of the encrypted payload is also generated and then recorded in a distributed ledger entry S518. This is an example of a third sent-data ledger entry. The third sent-data ledger entry is an example of data to be used for an audit action. The sender apparatus 104 generates the third sent-data ledger entry comprising the hash, the channel identifier, a reference to the data structure, a reference to a smart contract for checking that the data structure referred to exists and the sender apparatus signature. Once the ledger entry is received by the nodes in the channel from the ordering service 112, the nodes in the channel execute the code of the smart contract. In this step, the smart contract comprises instructions for each node to check if data structure referred to exists in the index. Each node in the channel performs the check and the consensus mechanism is performed as before. If consensus is reached, the ledger entry is added to the ledger.

The encrypted subject data payload is then sent by the sender apparatus 104 to the recipient apparatus 105 S519. This sending of the data is not performed over the distributed ledger, i.e. the encrypted subject data payload is not recorded on the distributed ledger. Any standard manner of sending data between parties would be suitable for transferring the subject data payload from the sender apparatus 104 to the recipient apparatus 105. This transmission is performed directly from the second apparatus 104 to the receiver apparatus 105, i.e. not through the distributed ledger framework.

The recipient apparatus 105 and the other nodes in the channel then perform audit actions by comparing information on the distributed ledger using the local copy stored on the index at each node, and by using code executed on the nodes in the channel (such as the sender node 107) in the manner which will be described with reference to the below figures.

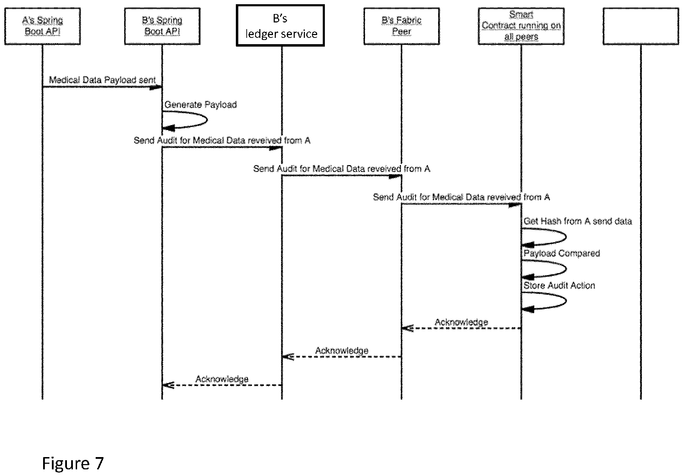

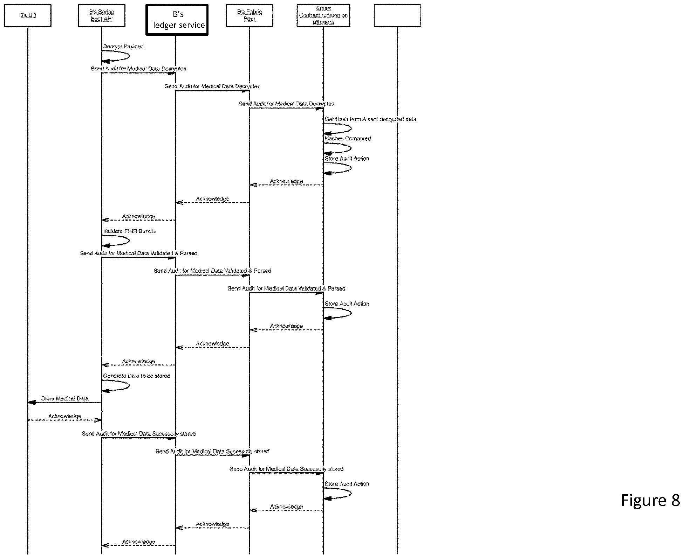

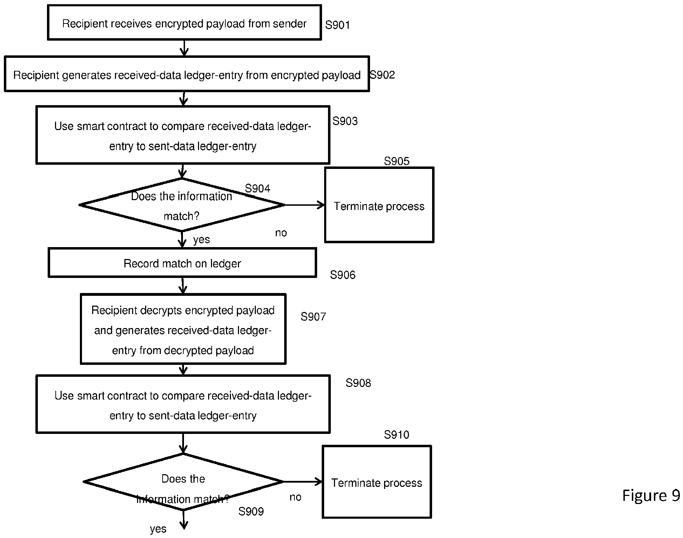

Figures 7-10 depict the actions of the recipient apparatus 105 upon receiving the data payload, in accordance with an embodiment. The recipient apparatus 105 will receive the encrypted payload from the sender apparatus S901.

The recipient apparatus 105 then uses its private key to decrypt its copy of the symmetric key in the data structure recorded on the distributed ledger and uses the symmetric key to decrypt the information identifying the subject data to be shared (i.e. the consent 301) in the data structure. The decryption result, for example a one-way function performed on the decrypted consent, is then recorded on the distributed ledger S504 as a ledger entry, in the manner described previously. Namely, the receiver apparatus 105 generates a ledger entry comprising the decryption result (for example the one-way function performed on the decrypted consent), the channel identifier, a reference to the data structure, a reference to one or more sent-data ledger entries, a reference to a smart contract for storing the decryption result and the receiver apparatus signature. The receiver apparatus node performs the check specified in the referenced smart contract. In this step, the check may comprise checking for the existence of the data structure and ledger entries referred to in the index. If the check is successful, the receiver apparatus node sends the ledger entry to the ordering service 112, which routes the ledger entry to the nodes in the channel. Each node in the channel performs the same check specified in the smart contract and the consensus mechanism is performed. If the consensus is achieved, the ledger entry is stored in the distributed ledger.

If the decryption was successful, then the process continues, otherwise it is terminated. The receiver apparatus 102, uses the data subject's public key to verify that the digital signature in the data structure belongs to the data subject. The result of this check is recorded on the distributed ledger as a ledger entry in the same manner as described above. If the check confirms an authentic signature, then this is recorded, and the process continues. Otherwise the failure is recorded and the process terminates.

The recipient apparatus 105 will then generate a hash of the encrypted subject data payload S902, using the same cryptographic hash function used in S518. The recipient apparatus 105 next creates a ledger entry comprising the hash they have generated and this is recorded in the distributed ledger in the manner described previously. This is an example of a second received-data ledger entry. The second received-data ledger-entry is an example of data to be used for an audit action. The receiver apparatus 105 generates the second received-data ledger entry comprising the hash, the channel identifier, a reference to a smart contract and the sender apparatus signature. Once the ledger entry is received by the nodes in the channel from the ordering service 112, the nodes in the channel execute the code of the smart contract in S903, as described below. Each node in the channel performs the check and the consensus mechanism is performed as before. If consensus is reached the ledger entry is added to the ledger.

In S903, a smart contract instructs the nodes in the channel to use the hash generated by the recipient apparatus 105 in the second received data ledger entry and compare it to the hash of the encrypted subject data payload that the sender apparatus 104 previously recorded in a distributed ledger entry in S518 (third sent-data ledger-entry). The smart contract, comprising a set of coded instructions which are executed by the nodes in the channel, is executed in S903.

As before, each node in the channel performs the comparison and uses a consensus mechanism. For example, if a node determines a match, it will digitally sign the second received-data ledger entry confirming the match and then transmit the signed ledger entry to all of other the nodes in the channel. Each node will inspect the signed ledger entries that they have received from the other nodes and determine what proportion of the nodes in the channel determined a match. If this proportion reaches or exceeds some preselected majority then the node will accept the second received-data ledger entry recording a match into the ledger. If the nodes determine that the hashes match according to the consensus mechanism then this confirms that the encrypted data received by the recipient apparatus 105 is the same as that which the sender apparatus 104 sent. If the hashes do not match S904 then the smart contract condition will not be satisfied and the ledger entry is not recorded. A notification may also be sent. This means that the recipient apparatus will not be authorised to proceed, terminating the process. As a result, the recipient will not decrypt the data and may instead discard the data for example S905. If the hashes match, then the smart contract condition will be satisfied and the distributed ledger nodes will record that they matched in the resulting ledger entry S906 and the recipient proceeds to decrypt the data payload S907.

This verification step means that computing time and resources are not spent on decrypting data that may not be valid. Encryption and decryption may be a relatively computationally demanding task. It also makes the transfer more secure since if the data has been compromised then there will be a discrepancy between the hash values and the process will terminate. The compromised data can be discarded for example.

The recipient apparatus 105 uses their private key to decrypt the symmetric key, which is then used to decrypt the encrypted data payload S907. The recipient generates a hash of the decrypted payload S907 using the same cryptographic hash function used in S516 and generates a ledger entry containing the hashed decrypted payload they have generated. This is an example of a first received-data ledger entry. The first received-data ledger entry is an example of data to be used for an audit action. The receiver apparatus 102 generates the first received-data ledger entry comprising the hash, the channel identifier, a reference to a smart contract and the sender apparatus signature. Once the ledger entry is received by the nodes in the channel from the ordering service 112, the nodes in the channel execute the code of the smart contract in S908 as described below. Each node in the channel performs the check specified in the smart contract and the consensus mechanism is performed as before. If consensus is reached the ledger entry is recorded in the ledger.

In S908 a smart contract executes in the same manner as described above on the nodes in the channel using the consensus mechanism. This time the recipient decrypted payload hash (first received data ledger entry) is compared to the hash generated by the sender in S516 before the payload was encrypted (second sent data ledger entry) S909.

If the hashes do not match, then it cannot be certain that the decrypted data payload corresponds exactly to the sender apparatus data payload used to generate their unencrypted hash. If this occurs, the smart contract condition will not be satisfied and the process will terminate. The recipient apparatus 105 will not be authorised to proceed S910. As a result, the recipient apparatus may not store the data into the record system and may instead discard the data S910, terminating the process.

This further verification step means that computing time and resources are not spent on incorporating and storing data that may not be valid for example. It also makes the transfer more secure since if the data has been compromised then there will be a discrepancy between the hash values and the process is terminated (and that compromised data can be discarded for example).

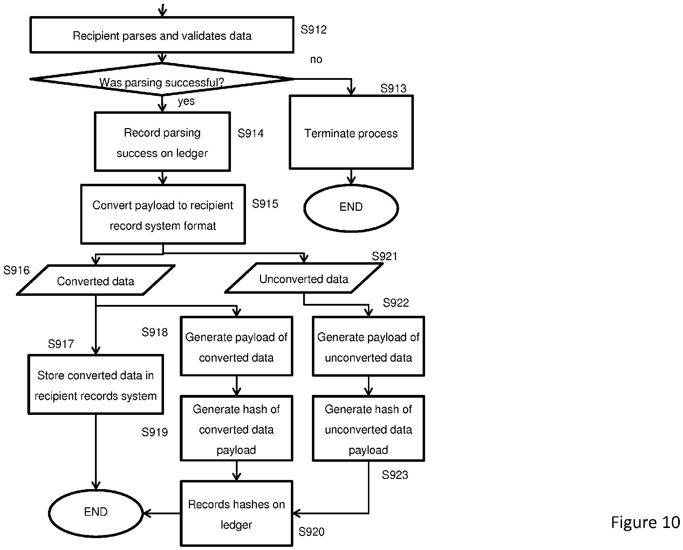

Figure 10 shows further method steps that may be performed in accordance with an embodiment. Continuing in Figure 10, if both hash comparisons have been successful, the recipient apparatus 105 will then parse the data payload content and validate it S911. It is possible that the data payload, while identical to what the sender apparatus 104 generated and sent, may not be in a proper computer-readable format. If the format of the data payload has been corrupted in some way or is in a non-readable format, then this step S912 will detect this. If the data payload cannot be validated, then the process is terminated S913. A failure may be recorded on the distributed ledger and the data may be discarded. If the data is successfully parsed and validated, then this success is recorded on the distributed ledger S914. In both cases, a ledger entry with the result may be generated by the receiver apparatus, comprising the result, the channel identifier, a reference to a smart contract for storing the result and the receiver signature. The ledger entry is processed in the same manner described previously, namely the check is initially performed by the receiver node. If successful, the ledger entry is sent to the ordering service 112 and then routed to the nodes in the channel. Each node performs the check according to the smart contract and the consensus mechanism is used. In this case, the check is to determine if the ledger entry is well formed for example. If consensus is reached, the ledger entry indicating the result is stored in the distributed ledger.

This additional verification step mitigates the integration of corrupted data into the recipient apparatus records system.

The recipient apparatus 105 will then convert the data payload from a shareable format into its own records system format S915. It is possible that some of the data will not be compatible with the records system format e.g. there may be fields for certain data in the sender apparatus record system and the data payload that has no corresponding field in the recipient apparatus record system.

The recipient apparatus records which data is able to be successfully converted to its format S916 and which data is not S916. The converted and unconverted data sets are extracted from the received decrypted data payload into two distinct data payloads (e.g. FHIR specifications), the first containing a copy of the data which was able to be converted S918 and that which was not S922. The recipient apparatus generates a cryptographic hash for each of the two new payloads S919, S923, and these hashes are recorded on the distributed ledger as ledger entries S920. Another type of cryptographic one-way function may be used. A ledger entry is generated by the receiver apparatus, comprising the hashes, the channel identifier, a reference to a smart contract for storing the hashes and the receiver signature. The ledger entry is processed in the same manner described previously, namely the check is initially performed by the receiver node. If successful, the ledger entry is sent to the ordering service 112 and then routed to the nodes in the channel. Each node performs the check according to the smart contract and the consensus mechanism is used. In this case, the check is to determine if the ledger entry is well formed for example. If consensus is reached, the ledger entry is stored in the distributed ledger.

The data which was successfully converted is then stored in the recipient apparatus records system for later use S917.

The recipient apparatus 105 then compares the decrypted received subject data to the subject data identified in the data structure 300. In this step, the recipient apparatus 105 determines whether the subject data received corresponds to that for which consent was given. The recipient apparatus 105 may discard any received subject data that does not match the subject data identified in the data structure for example. Alternatively, all the data may be discarded if any discrepancy is found. A ledger entry with the result of this comparison may be generated by the receiver apparatus 105, comprising the result, the channel identifier, a reference to a smart contract for storing the result and the receiver signature. The ledger entry is processed in the same manner described previously, namely the check is initially performed by the receiver node. If successful, the ledger entry is sent to the ordering service 112 and then routed to the nodes in the channel. Each node performs the check according to the smart contract and the consensus mechanism is used. In this case, the check is to determine if the ledger entry is well formed for example. If consensus is reached, the ledger entry indicating the result of the comparison is stored in the distributed ledger.

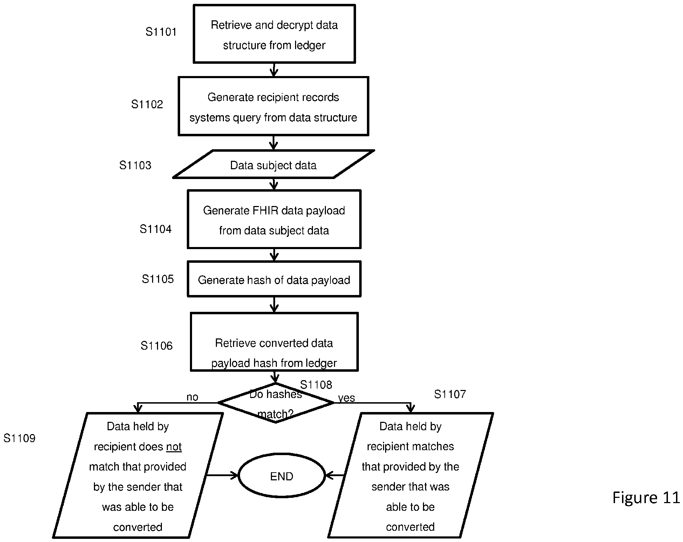

Figure 11 depicts a method for auditing the recipient apparatus record system, which may be performed in accordance with an embodiment. An authorised data subject downloads and decrypts the data subject-generated consent data structure 300 from the distributed ledger S1101 via one of the distributed ledger nodes. Then, the schedule of subject data identified to be shared in the data structure 300 is used to generate a records system query for the recipient's records system S1102. This query is sent to the recipient apparatus 105 and the query is executed. The query returns the subject data from the recipient apparatus records system that matches the subject data specified in the data structure S1103. The subject data does not leave the recipient apparatus.

This returned subject data should correspond to the subject data that is specified in the data structure that the recipient apparatus 105 was able to convert from the subject data payload shared by the sender apparatus. If the date range of the subject data to be shared was specified, any future modifications to the subject data, e.g. that may have been made by the recipient, will not be included in the subject data returned by the query provided that any modifications have been timestamped correctly and have not overwritten existing subject data. Only subject data with timestamps that fall within the date range specified in the data structure will be returned.

To check that this subject data possessed by the recipient is not compromised, the following steps are taken. The subject data returned by the query is converted by the recipient apparatus into the same format used in the shareable subject data payload S1104 and a hash is generated from this payload S1105 (e.g. a FHIR specification) and recorded in the distributed ledger. This is an example of a third received-data ledger-entry. The third received-data ledger entry is an example of data to be used for an audit action. The receiver apparatus 102 generates the third received-data ledger-entry comprising the hash, the channel identifier, a reference to a smart contract for performing the specified check and the receiver apparatus signature. Once the ledger entry is received by the nodes in the channel from the ordering service 112, the nodes in the channel execute the code of the smart contract as described below in S1106, S1107. Each node in the channel performs the check and the consensus mechanism is performed as before.

This hash is compared S1106, S1107, to the converted data payload hash which the recipient apparatus previously recorded in a distributed ledger entry in S919, S920 by executing the smart contract on the nodes in the channel in the same manner as described above using the consensus mechanism. If the hashes match then it can be determined that the recipient apparatus is storing the data that was originally sent to them which could be successfully converted S1108. If the hashes do not match, then it cannot be certain that the data matches that which was successfully converted and as such there may some discrepancy between the data which the recipient apparatus is storing and the data which the data subject intended to share with them S1109.

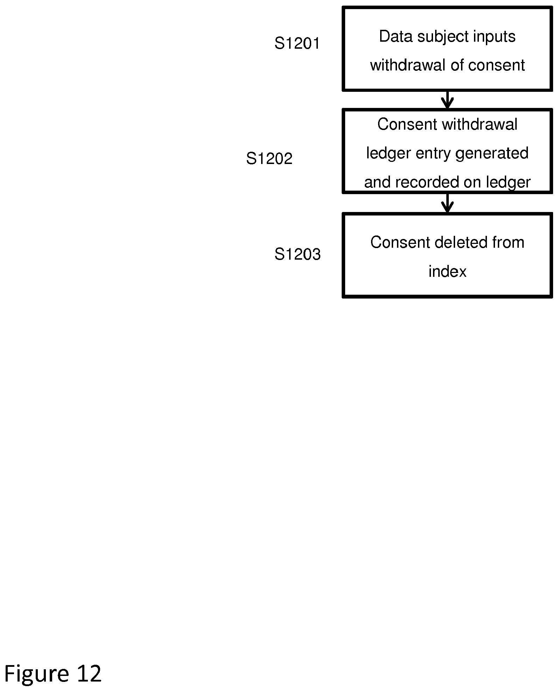

Figure 12 shows a flowchart of a method of withdrawing consent, which may be performed in accordance with an embodiment. In an embodiment, once consent has been given for a sender apparatus 104 to share subject data with a receiver apparatus 105, the sender apparatus 104 will continue to send updated subject data to the receiver apparatus 105 at scheduled intervals. For example, the steps described in relation Figures 5, 6, 9 and 10 above may be performed at regular intervals, so that the receiver apparatus 105 receives updated subject data at regular intervals. Instead of retrieving the data structure from the ledger, the data structure is retrieved from the sender apparatus index in S501 for each update.

A data-subject may wish to withdraw their consent to sharing of their subject data in order to prevent this update process from occurring. In order to do this, firstly the data subject inputs that they wish to withdraw their consent in S1201. For example, the data subject device 101 may display a list of the active consents which have been given by the data subject, and the data subject may make a selection of the consent to be withdrawn. This selection is then sent to the host apparatus 102.

A ledger entry is then generated in S1202 at the host apparatus and recorded on the distributed ledger in the manner described above. The host apparatus 102 generates the ledger entry comprising the withdrawal, the channel identifier, a reference to a smart contract and the host apparatus signature. Once the ledger entry is received by the nodes in the channel from the ordering service 112, the nodes in the channel execute the code of the smart contract. The smart contract comprises instructions for each node to perform the check. In this case, the check is to determine if the ledger entry is well formed for example. Each node in the channel performs the check and the consensus mechanism is performed as before. If consensus is reached the ledger entry is added.

As described previously, as well as maintaining a copy of the distributed ledger, each node also maintains an index comprising the ledger entry information relevant to the node. As well as recording the ledger entry on the distributed ledger, each node in the channel (in this case the sender node 107, receiver node 108 and host node 103) removes the data structure comprising the consent from their local index. At the next scheduled update, the sender apparatus 104 will then attempt to retrieve the consent data structure from its index. The consent data structure will no longer be present in the index, and therefore the update will not be performed and further data will not be sent to the receiver apparatus 105.

Although in the above described methods, various steps of encrypting data have been included, in alternative embodiments these steps may be omitted, for example where the subject data is not confidential.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made.

## Claims

1. A computer-implemented method for sending data from a sender apparatus to a recipient apparatus, wherein the data is associated with a data subject who is neither the sender nor the recipient, and the sending of the data is authorised by the data subject, the method comprising:
the data subject providing a data structure comprising information identifying subject data to be shared and a related electronic signature generated by the data subject;
recording information relating to the data structure on a distributed ledger;
the sender apparatus verifying the data subject's electronic signature;
the sender apparatus identifying the subject data to be shared based on the data structure.

2. The method according to claim 1, further comprising:
the sender apparatus sending the identified subject data to the recipient apparatus.

3. The method according to claim 2, further comprising one or more or all of:
the recipient apparatus verifying the data subject's electronic signature;
the recipient apparatus comparing the received subject data to the subject data identified in the data structure;
the recipient apparatus not using any received subject data that does not match the subject data identified in the data structure.

4. The method according to any preceding claim, wherein the data structure further comprises information relating to the identity of the data subject and the recipient, the method further comprising:
the sender apparatus generating a first sent-data ledger entry, the first sent-data ledger-entry comprising information relating to the identity of the data subject and the recipient;
recording the first sent-data ledger-entry on the distributed ledger;
comparing the information relating to the identity of the data subject and the recipient in the first sent-data ledger-entry, to the information relating to the identity of the data subject and the recipient in the data structure, at a plurality of parties to the distributed ledger;
wherein if the information relating to the identity of the data subject and the recipient are determined not to match, the sender apparatus does not send the identified subject data to the recipient.

5. The method according to any of claims 2 to 4, further comprising:
the sender apparatus generating a second sent-data ledger-entry, the second sent-data ledger entry comprising information relating to the identified subject data to be sent to the recipient apparatus;
recording the second sent-data ledger-entry on the distributed ledger;
the recipient apparatus generating a first received-data ledger-entry, the first received-data ledger entry comprising information relating to the subject data received by the recipient apparatus;
recording the first received-data ledger-entry on the distributed ledger;
comparing the second sent-data ledger-entry to the first received-data ledger-entry at a plurality of parties to the distributed ledger;
if the second sent-data ledger-entry and the first received-data ledger-entry are determined not to not match, terminating the process.

6. The method according to any one of claims 2 to 5, wherein the sender apparatus encrypts the subject data before sending the subject data and further comprising:
the sender apparatus generating a third sent-data ledger-entry, the third sent-data ledger entry comprising information relating to the encrypted subject data to be sent to the recipient apparatus;
recording the third sent-data ledger-entry on the distributed ledger;
the recipient apparatus generating a second received-data ledger-entry, the second received-data ledger entry comprising information relating to the encrypted subject data received by the recipient apparatus;
recording the second received-data ledger-entry on the distributed ledger;
comparing the third sent-data ledger-entry to the second received-data ledger-entry at a plurality of parties to the distributed ledger;
if the third sent-data ledger-entry and the second received-data ledger-entry are determined not to not match, terminating the process.

7. A computer-implemented method for sending data from a sender apparatus to a recipient apparatus, the method comprising:
the sender apparatus generating a sent-data ledger-entry relating to the data to be sent;
the sender apparatus sending the data to the recipient;
recording the sent-data ledger-entry on a distributed ledger;
the recipient apparatus generating a received-data ledger-entry relating to the received data;
recording the received-data ledger-entry as a distributed ledger entry;
comparing the sent-data ledger-entry to the received-data ledger entry at a plurality of parties to the distributed ledger.

8. The method according to claim 7, wherein the data sending is authorised by a data subject who is not the sender nor the recipient, and wherein the method further comprises:
the data subject generating a data structure comprising information relating to the identity of the data subject and the recipient;
recording the data structure as a ledger transaction entry on the distributed ledger;
the sender apparatus generating a further sent-data ledger-entry entry, the further sent-data ledger-entry comprising information relating to the identity of the data subject and the recipient;
recording the further sent-data ledger-entry entry on the distributed ledger;
comparing the information relating to the identity of the data subject and the recipient in the further sent-data ledger-entry, to the information relating to the identity of the data subject and the recipient in the data structure using a consensus mechanism;
wherein if the information relating to the identity of the data subject and the recipient are determined not to match, the sender apparatus does not send the identified data to the recipient.

9. The method according to any one of claims 7 to 8, wherein the sender apparatus encrypts the data before sending the data to be sent and wherein the sent-data ledger-entry relates to the unencrypted data and the received-data ledger-entry relates to the decrypted data, wherein if it is determined that the sent-data ledger-entry and the received-data ledger-entry do not match, the recipient apparatus makes no more use of the data.

10. The method according to any one of claims 7 to 9, wherein the sender apparatus encrypts the data to be sent and wherein the sent-data ledger-entry relates to the encrypted data, wherein if it is determined that the sent-data ledger-entry and the received-data ledger-entry do not match, the recipient apparatus makes no more use of the data.

11. A carrier medium comprising computer readable code configured to cause a computer to perform the method of any one of claims 1 to 10.

12. A sender apparatus, comprising:
a receiver configured to receive a data structure, information relating to the data structure being recorded on a distributed ledger, the data structure originating from a data subject, wherein the data structure comprises information identifying subject data to be shared and a related electronic signature generated by the data subject;
a processor configured to:
verify the data subject's electronic signature;
identify subject data to be shared based on the data structure.

13. A system, comprising a sender apparatus, a data subject device, a host apparatus and a receiver apparatus, the data subject device comprising:
a processor configured to generate a data structure comprising information identifying subject data to be shared and a related electronic signature;
a transmitter configured to transmit the data structure to the host apparatus;
the host apparatus, sender apparatus and receiver apparatus configured to record information relating to the data structure on a distributed ledger;
the sender apparatus comprising a processor configured to:
verify the data subject's electronic signature;
identify the subject data to be shared based on the data structure.

14. A receiver apparatus, comprising:
a receiver configured to receive data from a sender apparatus;
a processor configured to:
generate a received-data ledger-entry relating to the received data;
record the received-data ledger-entry on a distributed ledger, the distributed ledger comprising a sent-data ledger-entry relating to the data, wherein the sent-data ledger-entry was generated by the sender apparatus;
compare the sent-data ledger-entry to the received-data ledger-entry.

15. A system, comprising a sender apparatus and a receiver apparatus, the receiver apparatus comprising:
a transmitter configured to send data to a receiver apparatus;
a processor configured to:
generate a sent-data ledger-entry relating to the data to be sent;
record the sent-data ledger-entry on a distributed ledger;
compare the sent-data ledger-entry to a received-data ledger-entry relating to the received data, the distributed ledger comprising the received-data ledger-entry, wherein the received-data ledger-entry was generated by the receiver apparatus;
the sender apparatus comprising:
a receiver configured to receive data from a sender apparatus;
a processor configured to:
generate a received-data ledger-entry relating to the received data;
record the received-data ledger-entry on a distributed ledger, the distributed ledger comprising a sent-data ledger-entry relating to the data, wherein the sent-data ledger-entry was generated by the sender apparatus;
compare the sent-data ledger-entry to the received-data ledger-entry.
